# EUROPÄISCHE PATENTSCHRIFT

(11) **EP 2 550 464 B1**
(45) Veröffentlichungstag und Bekanntmachung des Hinweises auf die Patenterteilung: **05.03.2014**
(21) Anmeldenummer: 11708782.5
(22) Anmeldetag: 08.03.2011
(51) Int. Cl.: F16C 33/64, B21D 53/10, B21K 1/04

(54) **VERFAHREN ZUR GLEICHZEITIGEN HERSTELLUNG VON MEHR ALS EINEM LAGERRING FÜR EIN KEGELROLLENLAGER**
PROCESS FOR SIMULTANEOUSLY PRODUCING MORE THAN ONE BEARING RING FOR A TAPERED ROLLER BEARING
PROCEDE DE FABRICATION SIMULTANEE DE PLUS D'UNE BAGUE DE ROULEMENT POUR UN ROULEMENT A ROULEAUX CONIQUES

(30) Priorität: 20.03.2010 DE 102010012167
(43) Veröffentlichungstag der Anmeldung: 30.01.2013
(73) Patentinhaber: Schaeffler Technologies AG & Co. KG, 91074 Herzogenaurach (DE)
(72) Erfinder: STERKER, Rainer, 97714 Oerlenbach (DE)
(86) Internationale Anmeldenummer: PCT/EP2011/053427
(87) Internationale Veröffentlichungsnummer: WO 2011/117063

(56) Entgegenhaltungen:
- DE-A1-102005 014 967
- DE-A1-102008 038 827
- DE-C- 657 415
- JP-A- 62 292 920
- US-A- 3 387 900
- US-A- 3 597 819

## Beschreibung

### Gebiet der Erfindung

Die Erfindung betrifft ein Verfahren zur gleichzeitigen Herstellung von mehr als einem Lagerring für ein Kegelrollenlager.

### Hintergrund der Erfindung

Kegelrollenlager weisen bekanntermaßen einen Außenring, einen Innenring und zwischen diesen beiden Lagerringen angeordnete kegelförmige Wälzkörper auf. Die Wälzkörper sind in einem Käfig gehalten und wälzen sich auf schräg zueinander angeordneten Flächen des Lagerinnenrings bzw. des Lageraußenrings ab. Ein solches Kegelrollenlager ist beispielsweise durch die DE 10 2008 014 552 A1 bekannt geworden. Der Käfig dieses Kegelrollenlagers ist aus einem Drahtmaterial hergestellt. Die Lagerringe werden üblicherweise als Schmiedeteil hergestellt, was nicht nur ein hohes Gewicht bewirkt, sondern auch einen sehr umfangreichen Maschinenpark zur Bearbeitung derselben bedarf, und einen relativ zeitaufwendigen Herstellprozess verlangt. Um diese Nachteile zu verhindern, zeigt die US 3 387 900 A ein Kugellager mit aus einem Flachmaterial hergestellten Lagerringen.

### Aufgabe der Erfindung

Der Erfindung liegt die Aufgabe zugrunde, die Herstellung von Lagerringen für ein Kegelrollenlager zu vereinfachen bzw. deren Herstellung kostengünstig zu gestalten.

Der Erfindung liegt die Erkenntnis zugrunde, dass sich die Kosten zur Herstellung von Lagerringen deutlich reduzieren lassen, wenn mehr als ein Lagerring der gleichen Sorte, also Lagerinnenring oder Lageraußenring, in möglichst vielen Arbeitsschritten gleichzeitig hergestellt werden.

Die Erfindung betrifft demnach ein Verfahren zur gleichzeitigen Herstellung von mehr als einem Lagerring für ein Kegelrollenlager, welches gemäß den Merkmalen des Anspruchs 1 durch folgende Verfahrensschritte gekennzeichnet ist:
- Verwenden eines langgestreckten Flach- oder Drahtmaterials als Ausgangsmaterial zur Herstellung der wenigstens zwei Lagerringe,
- Gleichzeitiges Erzeugen der Querschnittsform der wenigstens zwei Lagerringe durch Längsprofilieren des Flach- oder Drahtmaterials,
- Abschneiden eines Abschnitts vom profilierten Flach- oder Drahtmaterial gemäß der jeweiligen Umfangslänge der wenigstens zwei Lagerringe,
- Ringförmiges Biegen des profilierten Abschnitts,
- Verschweißen der Enden des profilierten Abschnitts,
- Glühen zur Reduzierung der Materialhärte
- Verputzen der Schweißnaht
- Trennen der wenigstens zwei Lagerringe.

Durch dieses Herstellverfahren werden also wenigstens zwei Lagerringe bei fast allen ihren Herstellschritten mit großem Kostenvorteil gleichzeitig bearbeitet. Die Lagerringe können dabei als Außenring oder als Innenring ausgebildet sein.

Ein nach dem Trennen des profilierten, gebogenen, geschweißten und verputzten Abschnitts des Flach- oder Drahtmaterials in Einzellagerringe können diese, sofern notwenig, noch einer individuellen Endbearbeitung unterzogen werden, welche hinsichtlich der Gesamtzahl der Arbeitsschritte keinen großen Kostenfaktor ausmacht. So kann vorgesehen sein, dass nach dem Verputzen der Schweißnaht oder nach dem Trennen der Lagerringe diese jeweils einsatzgehärtet, gehärtet und/oder hartbearbeitet werden.

Gemäß einer vorteilhaften Weiterbildung der Erfindung ist vorgesehen, dass das Trennen des profilierten, gebogenen, geschweißten und verputzten Abschnitts des Flach- oder Drahtmaterials in Einzellagerringe in einzelne Lagerringe durch einen radialen Trennschnitt oder durch radiales Trennwalzen erfolgt. Dabei wird ein radial dünner, axial ausgerichteter Verbindungsabschnitt zwischen den beiden bis dahin noch verbundenen einzelnen Lagerringen durchtrennt.

Hinsichtlich des Flach- oder Drahtmaterial wird vorzugsweise ein Einsatzstahl, beispielsweise der Sorte 16MnCr5, oder ein Wälzlagerstahl verwendet.

### Kurze Beschreibung der Zeichnungen

Die Erfindung wird im Folgenden anhand der beiliegenden Zeichnung an bevorzugten Ausführungsformen näher erläutert. Darin zeigt
- Fig. 1: einen rund gebogenen und an seinen freien Enden zusammengeschweißten Abschnitt eines Flach- oder Drahtmaterials, an dem durch Längsprofilieren die Geometrie von zwei mittig zusammenhängenden Lageraußenring-Rohlingen ausgebildet ist,
- Fig. 2: eine Darstellung ähnlich der in Fig. 1, jedoch mit einer anderen Querschnittsgeometrie,
- Fig. 3: einen hälftigen Axialschnitt durch einen Lageraußenring, der nach dem Verfahren gemäß der Erfindung hergestellt wurde.

### Detaillierte Beschreibung der Zeichnungen

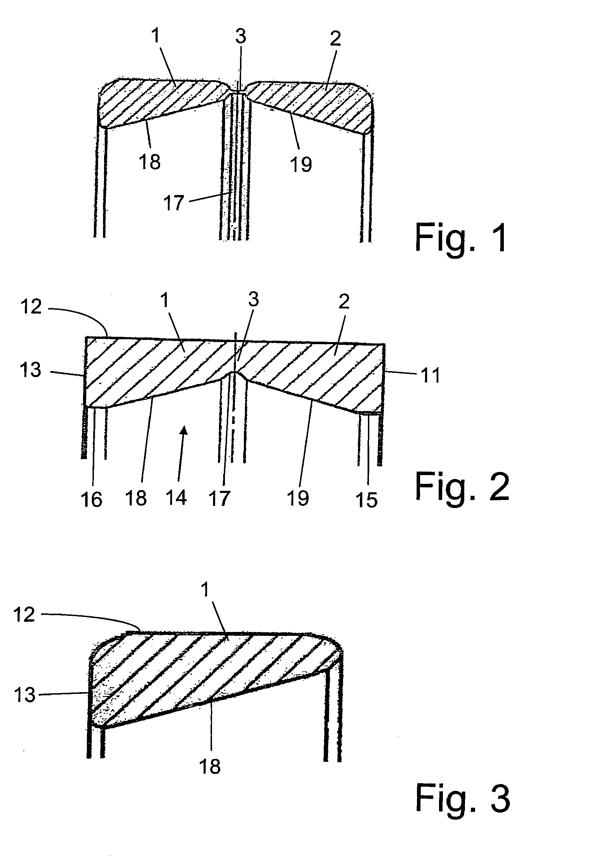

Die Fig. 1 zeigt schematisch einen Abschnitt von einem Flach- oder Drahtmaterial, welches entsprechend dem erfindungsgemäßen Verfahren zunächst durch Längsprofilieren zwischen zwei Walzen die für zwei Außenringe 1, 2 von zwei Kegelrollenlagern notwenige Querschnittsgeometrie erhalten habt. Wie Fig. 1 zeigt, erfolgte das Längsprofilieren in der Weise, dass die beiden Außenringe 1 und 2 noch über einen radial dünnen und axial kurzen Steg 3 miteinander verbunden sind. Außerdem ist die Geometrie der beiden noch voneinander zu trennenden Außenringe 1 und 2 fast vollständig ausgebildet.

Anschließend wurde von einem langem Abschnitt des so profilierten Flach- oder Drahtmaterial ein Stück in derjenigen Länge abgetrennt, welches weitgehend der jeweiligen Umfangslänge der zukünftigen Außenringe der Kegelrollenlager entspricht. Sodann wurde dieser Abschnitt ringförmig umgebogen, die beiden freien Enden miteinander verschweißt, dann geglüht und anschließend die Schweißnaht verputzt, also begradigt und geglättet. Demnach zeigt Fig. 1 die beiden Außenringe 1 und 2 unmittelbar vor deren Trennen durch einen radialen Trennschnitt oder eine durch ein Trennwalzen erzeugte Separierung der Außenringe. Fig. 3 zeigt einen der beiden Außenringe nach dem Trennvorgang.

Alternativ zu dem Ausführungsbeispiel der Fig. 1 wird ein weiteres Ausführungsbeispiel der Erfindung im Zusammenhang mit Fig. 2 erläutert.

Fig. 2 zeigt ein Flach- oder Bandmaterial, das durch ein Längsprofilieren in eine vorgegebene Form gebracht, rund gebogen, endseitig verschweißt sowie verputzt wurde. Das Flach- oder Bandmaterial ist abweichend vom Beispiel der Fig. 1 im Wesentlichen rechteckig ausgebildet, wobei drei Seiten, nämlich die radial äußere Mantelfläche 12 und die beiden Stirnseiten 11 und 13, gerade Flächen aufweisen. An die beiden radial ausgerichteten, geraden Stirnseiten 11 und 13 schließen sich radial innen Ringflächen 15 und 16 an, die parallel zu der radial äußeren Mantelfläche 12 ausgerichtet sind. Zwischen den beiden Ringflächen 15 und 16 ist die radial innere Mantelfläche 14 zu einer mittigen Radialnut 17 hin schräg zulaufend ausgebildet, wobei die beiden rechts- und linksseitigen Bereiche 18 und 19 sich zur Radialnut 17 hin an die gegenüberliegende, radial äußeren Mantelfläche 12 annähern. Diese beiden Bereiche 18 und 19 sind als Laufbahnen für die kegelförmigen Wälzkörper bereits weitgehend ausgebildet.

Anschließend wird das so vorbearbeitete Flach- oder Drahtmaterial gemäß Fig. 2 durch Ringwalzen ausgewalzt, wodurch eine an den Kanten abgerundete Kontur des Flach- oder Drahtmaterials entsteht, wie es in Fig. 1 bereits gezeigt ist.

In einem nachfolgenden Herstellungsschritt werden die beiden noch zusammenhängenden Rohlinge der Lagerringe 1, 2 im Bereich der Radialnut 17 voneinander getrennt. Danach erfolgt eine weitere Behandlung der Lagerringe 1, 2 durch Härten und/oder Hartbearbeiten. Nach diesem Schritt kann der jeweilige Außenring 1, 2 dann in der Montage mit anderen Teilen zu einem Wälzlager montiert werden.

Erfindungsgemäß ist es vorteilhaft, wenn mehr als ein Lagerring 1, 2 gleichzeitig hergestellt wird. Dabei ist es zweckmäßig, wenn die Lagerringe gleichzeitig aus dem Flach- oder Drahtmaterial hergestellt werden. Die Profilierung erfolgt gleichzeitig, auch das Schließen der Ringe, bis ein Trennschnitt die Teile trennt, so dass sie unabhängig voneinander weiterbearbeitet und montiert werden können.

### Bezugszeichenliste

- 1: Außenring
- 2: Außenring
- 3: Steg
- 11: Stirnseite
- 12: Radial äußere Mantelfläche
- 13: Stirnseite
- 14: Radial innere Mantelfläche
- 15: Ringfläche
- 16: Ringfläche
- 17: Radialnut
- 18: Bereich, Laufbahn
- 19: Bereich, Laufbahn

## Patentansprüche

1. Verfahren zur gleichzeitigen Herstellung von mehr als einem Lagerring für ein Kegelrollenlager, **gekennzeichnet durch** folgende Verfahrensschritte:
- Verwenden eines langgestreckten Flach- oder Drahtmaterials als Ausgangsmaterial zur Herstellung der wenigstens zwei Lagerringe (1, 2),
- Gleichzeitiges Erzeugen der Querschnittsform der wenigstens zwei Lagerringe (1, 2) **durch** Längsprofilieren des Flach- oder Drahtmaterials,
- Abschneiden eines Abschnitts vom profilierten Flach- oder Drahtmaterial gemäß der jeweiligen Umfangslänge der wenigstens zwei Lagerringe (1, 2),
- Ringförmiges Biegen des profilierten Abschnitts,
- Verschweißen der Enden des profilierten Abschnitts,
- Glühen zur Reduzierung der Materialhärte
- Verputzen der Schweißnaht,
- Trennen der wenigstens zwei Lagerringe (1, 2).

2. Verfahren nach Anspruch 1, **dadurch gekennzeichnet, dass** das Trennen der Lagerringe (1, 2) durch einen radialen Trennschnitt oder durch radiales Trennwalzen erfolgt.

3. Verfahren nach Anspruch 1 oder 2, **dadurch gekennzeichnet, dass** nach dem Verputzen der Schweißnaht oder nach dem Trennen der Lagerringe (1, 2) diese jeweils einsatzgehärtet, gehärtet und/oder hartbearbeitet werden.

4. Verfahren nach einem der vorherigen Ansprüche, **dadurch gekennzeichnet, dass** als Flach- oder Drahtmaterial ein Einsatzstahl verwendet wird.

5. Verfahren Anspruch 4, **dadurch gekennzeichnet, dass** als Flach- oder Drahtmaterial ein Stahl der Sorte 16MnCr5 oder ein Wälzlagerstahl genutzt wird.

6. Verfahren nach einem der vorherigen Ansprüche, **dadurch gekennzeichnet, dass** der Lagerring (1, 2) als Außenring oder als Innenring ausgebildet ist.

## Claims

1. Process for simultaneously producing more than one bearing ring for a tapered roller bearing, **characterized by** the following process steps:
- an elongated sheet or wire material is used as starting material for producing the at least two bearing rings (1, 2),
- the cross-sectional shape of the at least two bearing rings (1, 2) is simultaneously produced by longitudinally profiling the sheet or wire material,
- a portion is cut off from the profiled sheet or wire material according to the respective circumferential length of the at least two bearing rings (1, 2),
- the profiled portion is bent annularly,
- the ends of the profiled portion are welded,
- annealing is carried out to reduce the material hardness,
- the weld seam is finished,
- the at least two bearing rings (1, 2) are separated.

2. Process according to Claim 1, **characterized in that** the bearing rings (1, 2) are separated by a radial separation cut or by radial separation rolling.

3. Process according to Claim 1 or 2, **characterized in that**, after the weld seam has been finished or after the bearing rings (1, 2) have been separated, these are each case-hardened, hardened and/or subjected to final machining.

4. Process according to one of the preceding claims, **characterized in that** a case-hardened steel is used as the sheet or wire material.

5. Process according to Claim 4, **characterized in that** a steel of grade 16MnCr5 or a rolling bearing steel is used as the sheet or wire material.

6. Process according to one of the preceding claims, **characterized in that** the bearing ring (1, 2) is in the form of an outer ring or of an inner ring.

## Revendications

1. Procédé de fabrication simultanée de plus d'une bague de roulement pour un roulement à rouleaux coniques, **caractérisé par** les étapes de procédé suivantes :
- utilisation d'un matériau longiligne plat ou filiforme en tant que matériau de départ pour la fabrication des au moins deux bagues de roulement (1, 2),
- production simultanée de la forme en section transversale des au moins deux bagues de roulement (1, 2) par profilage longitudinal du matériau plat ou filiforme,
- découpe d'une section de matériau plat ou filiforme profilé conformément à la longueur périphérique respective des au moins deux bagues de roulement (1, 2),
- cintrage sous forme annulaire de la section profilée,
- soudage des extrémités de la section profilée,
- recuit pour réduire la dureté du matériau,
- ébavurage du joint de soudure,
- séparation des au moins deux bagues de roulement (1, 2).

2. Procédé selon la revendication 1, **caractérisé en ce que** la séparation des bagues de roulement (1, 2) s'effectue par une coupe de sectionnement radiale ou par un laminage de sectionnement radial.

3. Procédé selon la revendication 1 ou 2, **caractérisé en ce qu'**après l'ébavurage du joint de soudure ou après la séparation des bagues de roulement (1, 2), celles-ci sont respectivement cémentées, durcies et/ou trempées revenues.

4. Procédé selon l'une quelconque des revendications précédentes, **caractérisé en ce que** l'on utilise comme matériau plat ou filiforme un acier cémenté.

5. Procédé selon la revendication 4, **caractérisé en ce que** l'on utilise comme matériau plat ou filiforme un acier de classe 16MnCr5 ou un acier pour paliers à roulement.

6. Procédé selon l'une quelconque des revendications précédentes, **caractérisé en ce que** la bague de roulement (1, 2) est réalisée sous forme de bague extérieure ou de bague intérieure.
